# EUROPEAN PATENT SPECIFICATION

(11) **EP 4 452 877 B1**
(45) Date of publication and mention of the grant of the patent: **22.10.2025**
(21) Application number: 22830571.0
(22) Date of filing: 20.12.2022
(51) Int. Cl.: C02F 3/32, A01G 33/00, A01K 63/04, C02F 1/30, C02F 3/34, C02F 101/16, C02F 103/08, C02F 103/20

(54) **FILTER**
FILTER
FILTRE

(30) Priority: 20.12.2021 FI 20216302
(43) Date of publication of application: 30.10.2024
(73) Proprietor: ORIGIN BY OCEAN, 02150 Espoo (FI)
(72) Inventor: RUUSKANEN, Ari, 02150 Espoo (FI)
(74) Representative: Boco IP Oy Ab
(86) International application number: PCT/FI2022/050855
(87) International publication number: WO 2023/118660

(56) References cited:
- WO-A1-2016/073901
- WO-A1-98/51627
- WO-A2-2010/132628
- DE-A1- 102005 037 947
- DE-A1- 102006 041 405
- US-A1- 2015 305 313
- KRAUFVELIN PATRIK ET AL: "Biomass, diversity and production of rocky shore macroalgae at two nutrient enrichment and wave action levels", MARINE BIOLOGY, SPRINGER, DE, vol. 157, no. 1, 16 September 2009 (2009-09-16), pages 29 - 47, XP036658278, ISSN: 0025-3162, [retrieved on 20090916], DOI: 10.1007/S00227-009-1293-Z
- SUUTARI MILLA ET AL: "Nutrient removal by biomass accumulation on artificial substrata in the northern Baltic Sea", JOURNAL OF APPLIED PHYCOLOGY, KLUWER, DORDRECHT, NL, vol. 29, no. 3, 16 December 2016 (2016-12-16), pages 1707 - 1720, XP036235041, ISSN: 0921-8971, [retrieved on 20161216], DOI: 10.1007/S10811-016-1023-0
- KOTTA JONNE ET AL: "Assessing the potential for sea-based macroalgae cultivation and its application for nutrient removal in the Baltic Sea", SCIENCE OF THE TOTAL ENVIRONMENT, ELSEVIER, AMSTERDAM, NL, vol. 839, 26 May 2022 (2022-05-26), XP087104191, ISSN: 0048-9697, [retrieved on 20220526], DOI: 10.1016/J.SCITOTENV.2022.156230
- CAMARENA-GÓMEZ MARÍA TERESA ET AL: "Macroalgae production in Northern Europe: Business and government perspectives on how to regulate a novel blue bioeconomy", AQUACULTURE, ELSEVIER, AMSTERDAM, NL, vol. 560, 2 June 2022 (2022-06-02), XP087170968, ISSN: 0044-8486, [retrieved on 20220602], DOI: 10.1016/J.AQUACULTURE.2022.738434

## Description

### FIELD OF THE DISCLOSURE

The present disclosure relates to a filter for filtering water, which contains nutrients. The disclosure relates also to the use of such filters in connection with a marine aquarium, fish farm, or other fish pool. Further, the disclosure relates to a process for filtering water, which contains nutrients.

### BACKGROUND OF THE DISCLOSURE

Fish farming is an increasingly popular method for raising fish commercially in tanks or enclosures such as fishponds, usually for human and animal food. One of the most problematic issues relating to fish farming is the amount of nutrients released to the surrounding water areas, especially into the surface column. Nitrate, especially in the form of nitrate nitrogen (NO3-N), is the most harmful nutrient, which in additional amounts, causes increase of a primary production of plankton, and opportunistic filamentous algae overgrowth which result instability of an ecosystem. Opportunistic filamentous algae are known to increase due to elevated nutrient levels and to outcompete slow-growing perennial macroalgae in shallow coastal areas causing severe shifts in algal communities and habitat changes for the associated fauna. When the algae detach from the primary substrate and form sublittoral drifting and decaying mats, oxygen deficiency occurs frequently.

Regarding fish farming, environmental permits and corresponding norms define the allowable amount of nutrients that can be released. Current modern technique for nutrient removal is to use mechanical, microbe and soil filters, by which it is difficult to remove nutrients, especially NO3-N, below certain levels. Thus, existing technology to remove nitrate is to use mechanical filters and methods of nitrification. However, these methods even when used together do not remove all nitrate i.e. unwanted amounts of nitrogen remains in water column. Some examples of known approaches to nutrient removal from fish farming are found in US 2015/305313 A1, WO 2010/132628 A2, WO 98/51627 A1 and WO 2016/073901 A1.

The prior art DE 10 2006 041405 A1 and DE 10 2005 037947 A1 teaches algal water filters using brown algae from the genus Fucus.

Despite the ongoing research and development in the field, there is still a need to provide an improved filter and filtration process for removing nutrients from water, particularly from waters which originate from aquaculture, such as fish farms, or from marine aquarium. Thus, the present invention is especially useful for removing additional nutrients i.e. nutrients of antropogenic origin from water.

### BRIEF DESCRIPTION OF THE DISCLOSURE

The disclosure provides a filter for filtering water, which contains nutrients, such as nitrate. The filter of the invention is defined in the appended claims and comprises a filter casing, and biomass comprising living brown algae individual(s) closed inside said filter casing, wherein the filter casing allows water to flow through the filter while keeping the living brown algae individual(s) in the filter casing, and wherein the living brown algae individual(s) are macroalgae selected from the genus Fucus.

The disclosure further provides a process for filtering water, which contains nutrients. The process is defined in the appended claims and comprises the following steps, (a) providing a filter casing containing biomass comprising living brown algae individual(s), wherein the living brown algae individual(s) are macroalgae selected from the genus Fucus; (b) guiding the water, which contains nutrients, from a water source to the filter so that the water to be filtrated is contacted with the living brown algae individual(s) contained in the filter casing; and (c) guiding the filtrated water, away from the filter. The guiding can be active or passive. In active guiding the water guided using specific guiding means to guide the water to the filter. In passive guiding natural water flows are utilized for guiding the water to the filter.

In the present disclosure, a filter containing living brown algae individual(s) is organized next to an anthropogenic nutrient source to catch extra nutrients before nutrients will be dispersed into the surrounding water areas (open system) or before the nutrient concentration in a closed system increases too high.

The disclosure generally involves providing a water filtration apparatus and process in connection with a marine aquarium (closed system), fish farm (open system), or other fish pool (open or closed system). Especially, in the case of fish farms, environmental permits and the corresponding norms define the allowable amount of nutrients that can be released, and thus, the volume of fish stock is related to amount of nutrient release. It is an advantage of the present disclosure that the amount of nutrient releases can be decreased, and by that, the volume of fish stock can be increased. Thus, increasing the productivity of the fish farm without increasing the environmental harms. The nutrient releases can be decreased by directly decreasing the nutrients released from the fish farm or via "compensation" thus decreasing the nutrients from the surrounding water area, which might contain nutrients from other sources as well.

The disclosure is based on the idea of using living brown algae individual(s) in the filter. Fucus, which is a genus of brown algae *(Phaeophyta),* is especially suitable to be used in the filter of the disclosure. For the purpose of the invention, the living brown algae individual(s) are macroalgae selected from the genus Fucus. When the macroalgae is growing on the filter casing, the attachment area compared to the biomass of the algae is smaller, which makes it possible to have more algae in the filter. Further, macroalgae is easier to keep in the filter casing while there is continuous water flow through the filter.

In a natural environment (at least in in Finnish coastal waters) Fucus typically grows submerged between a water depth of 1 and 5 meters forming a continuous belt on rocky bottoms. Brown algae, such as Fucus, use/intake nutrients from a water column for growth and metabolism. Typically, the growth limiting nutrient is nitrate, and especially the nitrate nitrogen (NO3-N) is a useful form for brown algae, and especially Fucus. NO3-N is also one of the main and most harmful output of fish farming and agriculture.

The filter of the disclosure is placed in connection of a nutrient source, such as fish farming outflow water, for example. Wastewater from a fish farm is guided either actively with a pump or passively by utilizing natural currents thru the filter. During the water through-flow, nutrient intake by brown algae individuals take place, and as a result less nutrient rich water comes out. The size or the number of the filters varies, and they are tailored for each purpose at the given nutrient source. In the design of a filter of the present disclosure the following parameters can be considered: (i) biomass (number of individuals), (ii) exposure time, (iii) water temperature and (iv) amount of available PAR light. PAR or Photosynthetic Active Radiation is essentially a measurement of light emission within the photosynthetic range of 400-700nm.

An advantages of the present invention is that brown algae, such as Fucus, belongs to the flora of many coastal waters, and therefore it does not need maintenance, it is not harmful for ecosystem and it does not output harmful substances if harvested before it dies. On the contrary, it is a key species which maintain biodiversity among many other positive impacts. Another advantage of the disclosure is that less NO3-N is released to the nature. A further advantage of the disclosure is that the filters of this disclosure can simultaneously be used to for biomass production and used as storage for the biomass.

In the prior art, mechanical and soil filters are used, but with these it is difficult to remove NO3-N nutrients below certain levels. However, the filter of the present disclosure can remove basically all nutrients. The filtration is more effective the more there is biomass (brown algae) in the filter and the longer the exposure time of nutrients with the biomass is.

Thus, the present disclosure provides the use of the filter of the disclosure in connection with a marine aquarium, fish farm, or other fish pool, wherein the water circuit can be closed or open.

Another advantage of the disclosure is that the filter is a natural product. It does not increase nutrient emissions into water column, but on the contrary removes them. During the photosynthesis, a brown algae filter produces oxygen into water column which improve wellness (compared to old conditions) of fish individuals.

### BRIEF DESCRIPTION OF THE DRAWINGS

In the following the disclosure will be described in greater detail by means of preferred embodiments with reference to the accompanying drawings, in which
Figure 1 is a schematic flow diagram representing one embodiment of the process,
Figure 2a is a top view of an embodiment of the filter in connection with a fish pool in an open water location, wherein the filter is outside the fish pool,
Figure 2b is a side view of an embodiment of the filter in connection with a fish pool in an open water location, wherein the filter is outside the fish pool,
Figure 3a is a top view of an embodiment of the filter in connection with a fish pool in an open water location, wherein the filter is inside the fish pool,
Figure 3b is a side view of an embodiment of the filter in connection with a fish pool in an open water location, wherein the filter is inside the fish pool,
Figure 4a is a top view of an embodiment of the filter in connection with an open water fish farm, wherein two or more filters are located outside the fish pool as separate filter units surrounding the fish pool,
Figure 4b is a side view of an embodiment the use of the filter is in connection with an open water fish farm, wherein two or more filters are located outside the fish pool as separate filter units surrounding the fish pool, and
Figure 5 is an example graph showing the intake rates of NO3-N of an experiment, in which two different biomass amounts were tested in the filter.

### DETAILED DESCRIPTION OF THE DISCLOSURE

As mentioned the invention as defined in the claims provides a filter for filtering water, which contains nutrients, characterized in that the filter comprises (a) a filter casing, and (b) biomass comprising living brown algae individual(s) closed inside said filter casing, wherein the filter casing allows water to flow through the filter while keeping the living brown algae individual(s) in the filter casing. There is furthermore an oxidizer reservoir and a first oxidizer feed line, and the oxidizer reservoir is configured to feed oxidative enzyme through the first oxidizer feed line to the water to be filtrated before it reaches the filter casing containing the living brown algae individual(s).

In the invention the filter casing is a box or tube through which water to be filtrated can flow, and which contains biomass comprising living brown algae individual(s) inside said filter casing. When the filter is a box or a tube through which water to be filtrated can flow, the filter comprises water inlet and outlet. The water to be purified is guided into the filter through the water inlet, and after the water containing nutrients has been contacted with the brown algae individual(s) inside said filter, the purified water is guided through the water outlet.

The filter casing can be formed of a material that act as substrate or culture medium for the biomass or the casing can contain such substrate or culture medium. Brown algae individual(s) can attach and grow on almost on any surface. However, in order to avoid the brown algae individual(s) to move freely in the filter, it is possible to use a mat, net or mesh into which the brown algae individual(s) can attach in the filter. By having a good attachment of the brown algae individual(s) in the filter, one can avoid possible clogging of the filter outlet. Further, the tube or box like casing can be open or closed from the top part, thus forming a channel through which the water to be filtrated can flow.

The casing can be formed for example of metal, glass, or polymer material, and the inner surface can be structured uneven so that there is more surface area for the brown algae individual(s) to attach. In another embodiment, the filter casing comprises a mat, a net or a mesh into which the brown algae individual(s) can attach, or which is used to enclose the brown algae individual(s). The filter can alternatively or additionally comprise one or more rope or cord onto which the brown algae individual(s) can attach.

In one embodiment of the invention, the filter casing acts as a substrate, and it is a net, mat, rope, or cord on which the brown algae individual(s) are growing. This type of filter is especially suitable to be used in connections with outdoor fish farms. The filter can be installed in or around the fish "bag", which results less emissions to surrounding water column, which in turn allows bigger fish stock. The water flow through the filter can be enhanced by external pumps, gravity or alternatively natural flow of the water (currents) can be utilized. Especially a filter casing formed of a net is preferred in open water locations.

When the filter is used in open water areas such as see or lake, the filter casing can further contain means to float the filter. The floating means can be pontoons for example. The filter can be directly attached to said floating means or it can hang from it by hanging means, such as ropes, chains, cables or wires.

In order to facilitate the growth of the biomass comprising brown algae individual(s), the filter must enable strong enough natural (sun light) and/or artificial light (light of a lamp) to passage to the biomass. In the design of the filter of the present disclosure, one of the parameters that can be adjusted is the amount of available PAR light (range from 25 to 400 µE/m²s). PAR is essentially a measurement of light emission within the photosynthetic range of 400-700nm. This represents the area of light that plants use for photosynthesis, or to grow. PAR is measured by the amount of micro moles of light (i.e microeinstein = µE) per square meter per second. In an embodiment the filter further comprises a lamp, which can provide light in the wavelengths that drive photosynthesis for the living brown algae individual(s) in the filter. In one embodiment the lamp provides light in the wavelengths within the visible range, especially wavelengths within 400 to 700 nanometers (nm).

In general seaweed, or macroalgae, refers to thousands of species of macroscopic, multicellular, marine algae. The term includes some types of *Rhodophyta* (red), *Phaeophyta* (brown) and *Chlorophyta* (green) macroalgae. Macroalgae are typically characterized by their large size and high productivity. The biomass used in the present disclose comprise brown algae *(Phaeophyta)* individual(s).

The brown algae, comprising the class *Phaeophyceae,* are a large group of multicellular algae, including many seaweeds located in colder waters within the Northern Hemisphere. Most brown algae live in marine environments, where they play an important role both as food, and for the habitats they form. Many brown algae, such as members of the order Fucales, commonly grow along rocky seashores. Some members of the class, such as kelps, are used by humans as food. All these can be used in the filter of the disclosure.

The Fucales (fucoids) are an order in the brown algae (class Phaeophyceae). The list of families in the Fucales, as well as additional taxonomic information on algae, is publicly accessible at Algaebase. All these can be preferably used in the filter of the disclosure. The Fucaceae are a family in the Fucales, containing i.a. Fucus, which is a genus of brown algae found in the intertidal zones of rocky seashores almost throughout the world. Fucus is an especially preferred embodiment of brown algae to be used in the filter of the disclosure.

*Fucus vesiculosus,* is one of the species in the genus Fucus. *Fucus vesiculosus* known by the common names bladder wrack, black tang, rockweed, bladder fucus, sea oak, cut weed, dyers fucus, red fucus, and rock wrack is a seaweed found on the coasts of the North Sea, the western Baltic Sea, Northern Baltic Proper and the Atlantic and Pacific Oceans. *Fucus vesiculosus,* is the most preferred embodiment of brown algae to be used in the filter of the disclosure at least in Baltic environment/conditions.

The brown algae individual(s) used in the filter of the disclosure can be collected from natural populations. However, preferably the brown algae individual(s) are grown in laboratory conditions. When laboratory grown Fucus is used in the filter, the method for growing the Fucus is described for example in the "Handbook for Fucus vesiculosus cultivation". Individuals inside the filter can be cultivated in ambient conditions (both natural and anthropogenic ones). Preferably no external genetic manipulation or fertilization are used.

Brown algae is a living organism. For the filter of the disclosure to work, it is necessary that the brown algae in the filter is alive and well being. The efficiency of filtration capacity (nutrient intake rate) depends on different factors including the amount of biomass in the filter. The higher biomass the faster intake rate of nutrients, thus better filtration.

The regeneration of the filter is done by replacing the biomass in the filter with fresh brown algae individual(s). If the filter is used for a longer period, at some point at the end of a life span of a frond, the algae starts to die and decompose. This can cause that the contents of cells will be released into water, and thus, the captured nutrients would also be released. Before this occurrence will take place, the algae in the filter should be harvested. The harvested brown algae can be used as biomass for further processing. For example, if

Fucus is used in the filter, the nutrient rich Fucus contains high amounts of alginate. Alginate can be extracted from the harvested Fucus and refined in a biorefinery.

The filtration system in which the filter of the disclosure is used can further comprise a dilution pool or tank before the filter. The dilution pool or tank is used to adjust the concentration of nutrients in the water flow that is guided to the filter. The filtration system can further comprise connection lines to the water container, which contains the water that needs purification. The filtrated water can be returned to the same water container, from where the water was taken, or it can be disposed.

The effectiveness of the filter is dependent on the amount of biomass in the filter. Another factor is the concentration of nutrients in the water flow that is guided to the filter. In an embodiment the water flow to the filter contains nitrate nitrogen (NO3-N) in an amount of 10 to 10000 µg/l. Typically the amount is from 1000 to 10000 µg/l. In an embodiment the water to be filtrated is diluted before the filtration. The amount of nitrate nitrogen can vary depending on the site, where the filter is used. The amount of nitrate nitrogen (NO3-N) after dilution may be from 50 to 5000 µg/l, and in another embodiment from 100 to 1000 µg/l, or from 150 to 500 µg/l.

The disclosure also relates to a process for filtering water, which contains nutrients. The process as defined in the claims is characterized in that the process comprises the following steps, (a) providing a filter casing containing living brown algae individual(s), (b) guiding the water, which contains nutrients, from a water source to the filter so that the water to be filtrated is contacted with the living brown algae individual(s) contained in the filter casing, (c) guiding the filtrated water away from the filter, and wherein (d) oxidizer is added to the water to be filtrated before guiding the water to the filter.

The oxidiser comprises oxidative enzymes. The enzyme-catalyzed transformation product exhibits minimal toxicity or is more readily biodegradable than the parent compound. The oxidative enzymes include oxygenases, peroxidases, and polyphenol oxidases.

In an embodiment the process further comprises providing light for the living brown algae individual(s) in the filter, wherein the light is in the wavelengths that drive photosynthesis. The light can be provided with a lamp capable of providing light in the wavelengths within the visible range, especially wavelengths within 400 to 700 nanometers (nm). Alternatively, sun light can be allowed enter the space where the living brown algae individual(s) are in the filter.

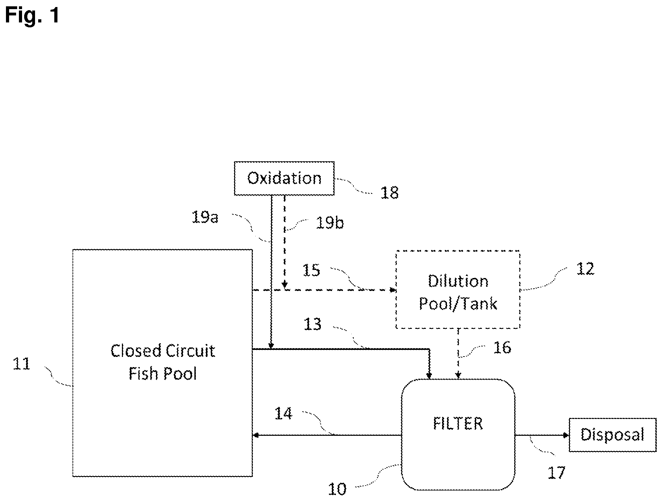

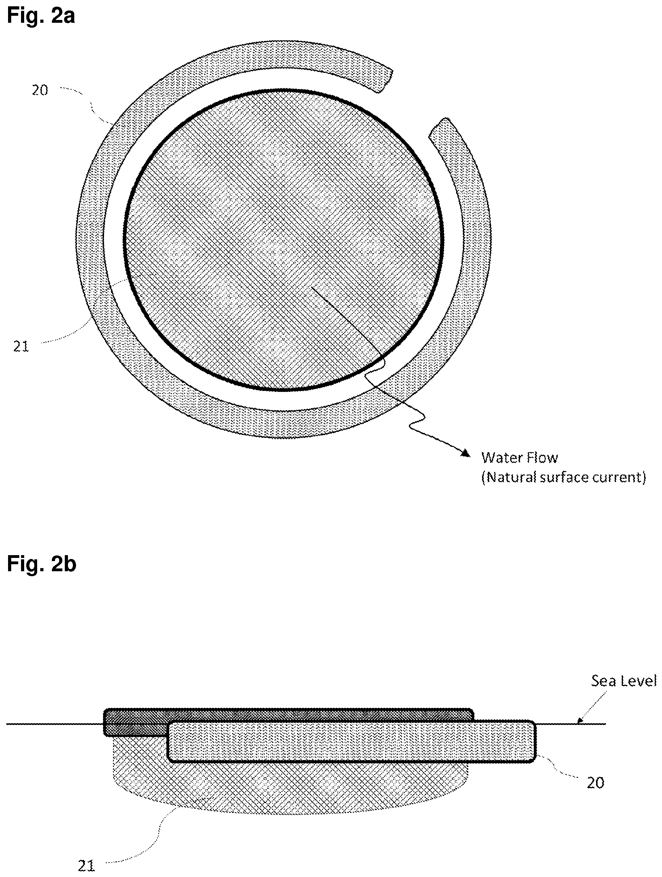

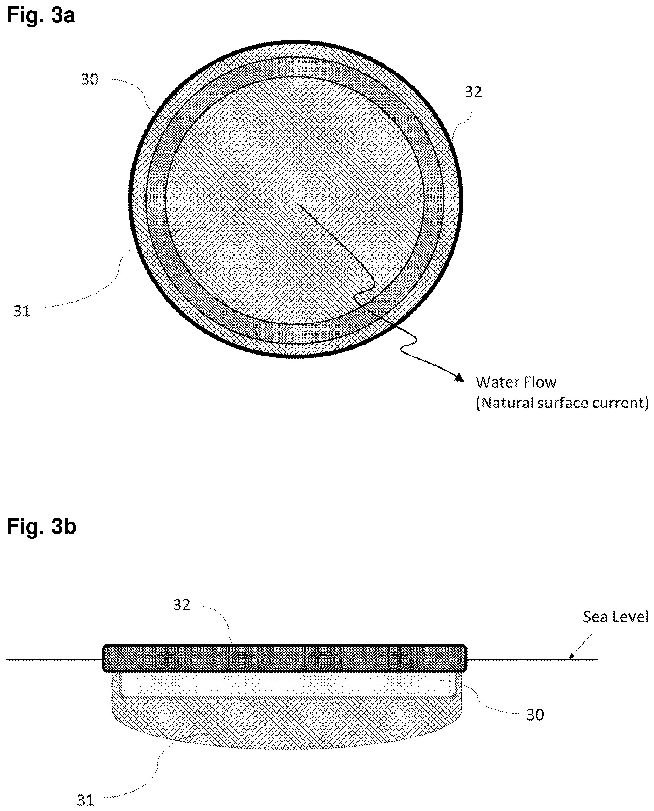

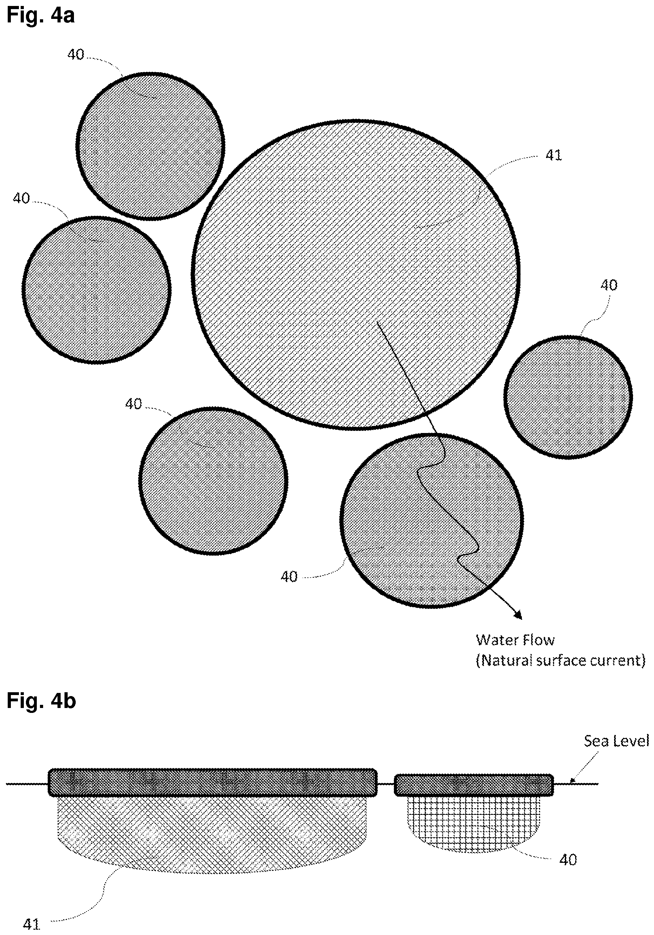

The filter can be installed both outdoor and indoor conditions. Examples of the filter assembly are shown in figures 1 to 4. Outdoor conditions include marine environment or mesocosmos (pool) like system with sea water flow though located on land. Examples of an indoor conditions are closed circuit fish farmings and marine aquariums. The filter can be installed inside a fish pool (see Figures 3a and 3b) or outside as an external apparatus (see figures 2a and 2b, as well as figures 4a and 4b).

Accordingly, in an embodiment of the process the water to be filtrated is water from a marine aquarium, fish farm, or other fish pool, wherein the water circuit can be closed or open. Other fish pool means any tank, net or container in which fish are kept and their movement is restricted from their natural living environment. Closed water circuit is shown in Figure 1. A closed water circuit means for example an indoor marine aquarium, wherein water is kept in a vessel, such as tank, pool or aquarium, and the water to be filtrated is circulated via the filter back to the water vessel. An open water circuit means for example an outdoor fish farm, in which the fish are kept in a net, which is submerged to the water of a lake, see, river or other water source, and the water flow through the filter is achieved at least partly by natural surface current, which can be helped with additional pumps. Examples of open water circuits embodiments are shown in Figures 2 to 4.

In an embodiment of the process the flow of water which is guided to the filter is restricted with a valve or other suitable means to allow regulation of the water flow to the filter. This can be used to regulate the amount of nutrients entering the filter and thus making sure that biomass can handle the nutrients in the water flow. Another way to adjust the functioning of the filter is to regulate the exposure time. For that purpose, in an embodiment of the process the filter casing is a closed vessel comprising water inlets and outlets, and exposure time during which the water containing nutrients is contacted with the living brown algae individual(s), is adjusted based on the amount of nutrients and the mass of living brown algae individual(s) in the filter. By limiting the outflow of the filter, the exposure time can be increased and thus make sure that desired amount of nutrients is removed from the water by the living brown algae individual(s) in the filter. Water temperature and the amount of light are also important factors when optimizing filtration conditions. The exposure time can vary a lot based on other process parameters. The exposure time can vary from seconds to hours, for example between 5 seconds and 5 hours.

In another embodiment of the process, the water flow to the filter is adjusted based on the concentration of nutrients in the water. It is also possible to adjust the concentration of the nutrients before guiding the water to the filter. For this purpose, in an embodiment of the process, the flow of water containing nutrients is guided to a dilution pool before it is guided to the filter and contacted with the living brown algae individual(s). Pure water is added to the dilution pool for adjusting the concentration of the nutrients. The pure water is preferably salted with marine salt to salinity 3-7 [psu] i.e. 0,3-0,7% salt/kg water. In this connection "pure water" means water that contains less nutrients than the nutrient rich water, which is diluted. In an example the added "pure water" is water which has been filtrated according to the disclosure.

In an embodiment of the process, the filtrated water is guided back to the water reservoir, which contained the original water source containing nutrients. An example of this is shown in Figure 1, wherein the water vessel (11) is a fish pool, and the water from that pool is guided via first connection line (13) to the filter (10) containing brown algae individual(s), such as Fucus. Before the water to be filtrated reaches the filter, the nitrogen containing impurities are at least partly oxidized to nitrates by adding oxidizer to the water to be purified. The oxidizer is fed from an oxidizer reservoir (18) through a first oxidizer feed line 19a to the first connection line (13).

The filtrated water is then guided via second connection line (14) back to the water vessel (11). Optionally, part or all of the filtrated water can be guided via disposal line (17) for disposal. Another optional feature is also presented in Figure 1, wherein nutrient rich water from the water vessel (11) is at least partly guided via a third connection line (15) to a dilution pool or tank (12), from which the diluted water containing lower concentration of nutrients is guided via fourth connection line (16) to the filter. In this embodiment, before the water to be filtrated reaches the dilution pool or tank (12), the nitrogen containing impurities are at least partly oxidized to nitrates by adding oxidizer to the water to be purified. The oxidizer is fed from an oxidizer reservoir (18) through a second oxidizer feed line 19b to the third connection line (15).

The disclosure further relates to the use of the filter according to the disclosure in connection with a marine aquarium, fish farm, or other fish pool, wherein the water circuit can be closed or open. in an embodiment, the use of the filter is in connection with an open water fish farm, wherein the filter is located on the fringe of the fish pool either inside or outside the net of the fish pool, and wherein water flow through the filter is achieved by natural surface current.

An example of use of the filter, wherein the filter is located on the outside fringe of the net of the fish pool is shown in Figure 3a and 3b, wherein filter (20) is almost fully surrounding the fish net (21) but leaving an opening through which it is easier to access the fish net by boat for example. The figure 2a is a schematic drawing of the filter and the fish net when looking from above. The figure 2b is a side view of the same the filter and the fish net. As can be seen from figure 2b, in this embodiment the filter is floating at the sea level so that just part of the tubular filter casing is above the water line (sea level in the Figure 3b). However, it is also possible that the filter is totally submerged to the water.

Another example of use of the filter, wherein the filter is located on the inside fringe of the net of the fish pool is shown in Figure 3a and 3b, wherein filter (30) is a tubular shape which makes a full circle inside the fish net (31). The figure 3a is a schematic drawing of the filter and the fish net when looking from above. The figure 3b is a side view of the same the filter and the fish net. In this figure the floating means (32) for the fish net are partly blocking the view to the filter. Although it cannot clearly be seen in Fig 3b, the filter is floating at the sea level so that just part of the tubular filter casing is above the water line (sea level in the Figure 3b). However, it is also possible that the filter is totally submerged to the water.

In another embodiment the use of the filter is in connection with an open water fish farm, wherein two or more filters are located outside the fish pool as separate filter units surrounding the fish pool. Typically, the distance between the border of the fish pool and the filter units is no more than 10 meters, preferable no more than 5 meters. An example of this, is shown in figure 4a and 4b. In this type of filter units, the filter casing is a net "bag" (40) in which the brown algae individuals are growing. The filter can also comprise means for floating, such as pontoons (42). This, type of casing allows large quantities of brown algae to be stored in the filter. Thus, the filter can be simultaneously used for cultivating and storing brown algae, such as Fucus, which can then be harvested and used as biomass in biorefining process, wherein alginate and other valuable components can be extracted. It is possible to have several filters (40) around one fish pool (41).

As a specific example of the use of the filter, indoor marine aquariums can be mentioned. The problem in these facilities is the high nitrate levels resulting of fish metabolism. The high nitrate levels which cannot be removed by conventional methods such as mechanical filters and denitrification. The filter set-up shown in figure 1, can used for such purposes.

Another specific example is indoor fish farming. The problem in indoor fish farming is also the high levels of nitrate in the fish pool due to results of fish metabolism. Another problem with the fish farms is that the level of nitrate limits the possible biomass of the fish stock. The filter of the disclosure removes the rest of the nitrates, which makes it possible to increase biomass of a fish stock in a pool. The filter of the disclosure can be installed indoor next to the fish pool and water circulation between the filter and the fish pool can be arranged inside a fish farming hall as shown figure 1. The filter of the disclosure is especially suitable for many fish farming facilities that are looking for ecological farming methods.

Yet another example is indoor fish farming, which uses water flow through the system in which inflow water comes from the sea and outflow water goes back to the sea. The problem is the high NO3-N levels in the outflow water resulting from fish metabolism. A possible filter setup is shown in Figure 1, when the optional disposal line (17) is used for outflow water back to the sea. This use of the filter reduces NO3-N levels and allows possible increase of the fish stock.

### EXAMPLE

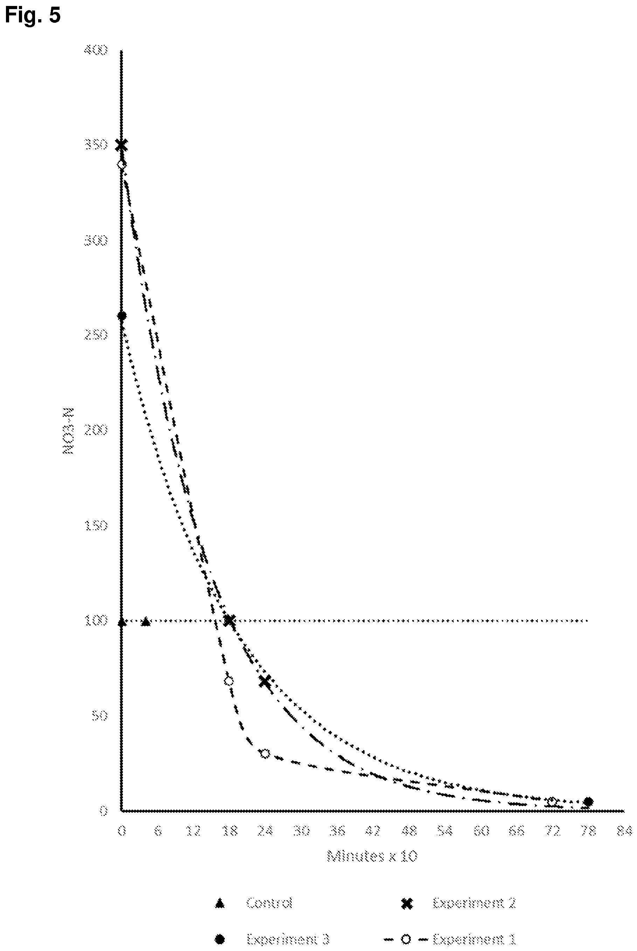

Figure 5 shows the intake rates of NO3-N of an experiment, in which three different concentrations (Experiments 1, 2, and 3) were tested in the filter. All experiments contained 0,5 kg of Fucus vesiculous in a 50 liter aquarium that was used as the filter casing. In the example additional lamps were used to provide sufficient amount of PAR light for the Fucus photosynthesis. In the control experiment (no algae), Fucus vesiculosus individuals were removed from the filter casing.

The results disclosed in Figure 5 show that Fucus vesiculosus provides intake of NO3-N. The X-axis in Figure 5 is time x 10 mins. The Y-axis (NO3-N µg per liter of water) shows the efficiently of filtration capacity (nutrient intake rate). In Fig. 5, the line representing experiment 2 is extrapolated to 780 minutes by using exponential extrapolation function. The same exponential extrapolation function has been used to draw the trendline of experiment 3. The actual measured datapoints of the experiments are shown in the Table 1 below.

**Table 1.**

| Minutes x 10 | Experiment 1 (NO3-N µg / liter) | Experiment 2 (NO3-N µg / liter) | Experiment 3 (NO3-N µg / liter) | Control (NO3-N µg / liter) |
|---|---|---|---|---|
| 0 | 340 | 350 | 260 | 100 |
| 4 | - | - | - | 100 |
| 18 | 68 | 100 | - | - |
| 24 | 30 | 68 | - | - |
| 72 | 5 | - | 5 | - |
| 78 | - | - | 5 | - |

## Claims

1. A filter for filtering water, which contains nutrients, **characterized in that** the filter comprises
(a) a filter casing,
(b) biomass comprising living brown algae individual(s) connected to said filter casing or closed inside said filter casing,
(c) an oxidizer reservoir, and
(d) a first oxidizer feed line,
wherein the filter casing allows water to flow through the filter while keeping the living brown algae individual(s) in the filter casing, which casing is a box or tube through which water to be filtrated can flow, and which contains biomass comprising living brown algae individual(s) inside said filter casing, and the water flow allows the water to be filtrated to be contacted with the living brown algae individual(s) growing in the filter casing, and wherein the living brown algae individual(s) are macroalgae selected from the genus Fucus, and
wherein the oxidizer reservoir is configured to feed oxidative enzyme through the first oxidizer feed line to the water to be filtrated before it reaches the filter casing containing said living brown algae individual(s).

2. The filter according to claim 1, **characterized in that** the filter further comprises a lamp, which can provide light in the wavelengths that drive photosynthesis for the living brown algae individual(s) in the filter.

3. The filter according to claim 2, **characterized in that** the lamp provides light in the wavelengths within the visible range, especially wavelengths within 400 to 700 nanometers (nm).

4. A process for filtering water, which contains nutrients, **characterized in that** the process comprises the following steps,
(a) providing a filter according to any of the claims 1 to 3,
(b) guiding the water, which contains nutrients, from a water source to the filter so that the water to be filtrated is contacted with the living brown algae individual(s) contained in the filter casing,
(c) guiding the filtrated water, away from the filter, and wherein
(d) oxidizer is added to the water to be filtrated before guiding the water to the filter, and the oxidizer comprises oxidative enzyme, such as oxygenases, peroxidases, and polyphenol oxidases.

5. The process according to claim 4, **characterized in that** the process further comprises providing light for the living brown algae individual(s) in the filter, wherein the light is in the wavelengths that drive photosynthesis.

6. The process according to claim 5, **characterized in that** the light is provided with a lamp capable of providing light in the wavelengths within the visible range, especially wavelengths within 400 to 700 nanometers (nm).

7. The process according to any one of the claims 4 to 6, **characterized in that** the water to filtrated is water from a marine aquarium, fish farm, or other fish pool, wherein the water circuit can be closed or open.

8. The process according to any one of the claims 4 to 7, **characterized in that** the flow of water which is guided to the filter is restricted to allow regulation of the water flow to the filter.

9. The process according to claim 8, **characterized in that** the water flow to the filter is adjusted based on the concentration of nutrients in the water.

10. The process according to any one of the claims 4 to 9, **characterized in that** the flow of water containing nutrients is guided to a dilution pool before it is guided to the filter and contacted with the living brown algae individual(s), and wherein pure water is added to dilution pool for adjusting the concentration of the nutrients.

11. The process according to any one of the preceding claims 4 to 10, **characterized in that** the filtrated water is guided back to the water reservoir, which contained the original water source containing nutrients.

12. The process according to any one of the preceding claims 4 to 11, **characterized in that** the filter casing is a closed vessel comprising water inlets and outlets, and exposure time during which the water containing nutrients is contacted with the living brown algae individual(s), is adjusted based on the amount of nutrients and the mass of living brown algae individual(s) in the filter.

13. The use of the filter according to any of the claims 1 to 3 in connection with a marine aquarium, fish farm, or other fish pool, wherein the water circuit can be closed or open.

14. The use according to claim 13, wherein the use of the filter is in connection with an open water fish farm, wherein the filter is located on the fringe of the fish pool either inside or outside the net of the fish pool, and wherein the water flow through the filter is at least partly achieved by natural surface current.

15. The use according to claim 14, wherein the use of the filter is in connection with an open water fish farm, and wherein two or more filters are located outside the fish pool as separate filter units surrounding the fish pool.

## Patentansprüche

1. Filter zum Filtern von Wasser, das Nährstoffe enthält, **gekennzeichnet dadurch, dass** der Filter Folgendes umfasst:
(a) ein Filtergehäuse,
(b) eine Biomasse, die ein oder mehrere lebende Braunalgenindividuen umfasst, die mit dem Filtergehäuse verbunden oder im Filtergehäuse eingeschlossen sind,
(c) einen Oxidationsmittelbehälter, und
(d) eine erste Oxidationsmittel-Zufuhrleitung,
wobei das Filtergehäuse gestattet, dass Wasser durch den Filter strömt, während das oder die lebenden Braunalgenindividuen im Filtergehäuse gehalten werden, wobei das Gehäuse ein Kasten oder eine Röhre ist, den/die das zu filternde Wasser durchströmen kann und der/die die Biomasse, die das oder die lebenden Braunalgenindividuen umfasst, im Inneren des Filtergehäuses hält, und der Wasserstrom gestattet, dass das zu filtrierende Wasser mit dem oder den im Filtergehäuse wachsenden lebenden Braunalgenindividuen in Kontakt gebracht wird, und wobei es sich bei dem oder den lebenden Braunalgenindividuen um Makroalgen handelt, die aus der Gattung Fucus ausgewählt sind, und
wobei der Oxidationsmittelbehälter dazu ausgelegt ist, Oxidationsenzyme durch die erste Oxidationsmittel-Zufuhrleitung dem zu filternden Wasser zuzuführen, bevor es das Filtergehäuse erreicht, das das oder die lebenden Braunalgenindividuen enthält.

2. Filter nach Anspruch 1, **gekennzeichnet dadurch, dass** der Filter ferner eine Lampe umfasst, die ein Licht in den Wellenlängen bereitstellen kann, die die Fotosynthese für das oder die lebenden Braunalgenindividuen im Filter antreiben.

3. Filter nach Anspruch 2, **gekennzeichnet dadurch, dass** die Lampe Licht in den Wellenlängen innerhalb des sichtbaren Bereichs, insbesondere Wellenlängen innerhalb von 400 bis 700 Nanometer (nm), bereitstellt.

4. Verfahren zum Filtern von Wasser, das Nährstoffe enthält, **gekennzeichnet dadurch, dass** das Verfahren die folgenden Schritte umfasst:
(a) Bereitstellen eines Filters nach einem der Ansprüche 1 bis 3,
(b) Führen des Wassers, das Nährstoffe enthält, von einer Wasserquelle zum Filter, so dass das zu filternde Wasser mit dem oder den im Filtergehäuse enthaltenen lebenden Braunalgenindividuen in Kontakt gebracht wird,
(c) Führen des filtrierten Wassers weg vom Filter, und wobei
(d) dem zu filtrierenden Wasser Oxidationsmittel zugegeben wird, bevor das Wasser zum Filter geführt wird, und das Oxidationsmittel Oxidationsenzyme wie Oxygenasen, Peroxidasen und Polyphenoloxidasen, umfasst.

5. Verfahren nach Anspruch 4, **gekennzeichnet dadurch, dass** das Verfahren ferner umfasst: Bereitstellen von Licht für das oder die lebenden Braunalgenindividuen im Filter, wobei das Licht in den Wellenlängen vorliegt, die die Fotosynthese antreiben.

6. Verfahren nach Anspruch 5, **gekennzeichnet dadurch, dass** das Licht mit einer Lampe bereitgestellt wird, die in der Lage ist, ein Licht in den Wellenlängen innerhalb des sichtbaren Bereichs, insbesondere Wellenlängen innerhalb von 400 bis 700 Nanometer (nm), bereitzustellen.

7. Verfahren nach einem der Ansprüche 4 bis 6, **gekennzeichnet dadurch, dass** es sich bei dem zu filternden Wasser um Wasser aus einem Meeresaquarium, einer Fischzuchtanlage oder einem anderen Fischbecken handelt, wobei der Wasserkreislauf geschlossen oder offen sein kann.

8. Verfahren nach einem der Ansprüche 4 bis 7, **gekennzeichnet dadurch, dass** der durch den Filter geführte Strom von Wasser gedrosselt wird, um eine Regelung des Wasserstroms zum Filter zu gestatten.

9. Verfahren nach Anspruch 8, **gekennzeichnet dadurch, dass** der Wasserstrom zum Filter auf Grundlage der Konzentration an Nährstoffen im Wasser angepasst wird.

10. Verfahren nach einem der Ansprüche 4 bis 9, **gekennzeichnet dadurch, dass** der Strom von nährstoffhaltigem Wasser zu einem Verdünnungsbecken geführt wird, bevor er zum Filter geführt und mit dem oder den lebenden Braunalgenindividuen in Kontakt gebracht wird, und wobei dem Verdünnungsbecken reines Wasser zugesetzt wird, um die Konzentration der Nährstoffe anzupassen.

11. Verfahren nach einem der vorhergehenden Ansprüche 4 bis 10, **gekennzeichnet dadurch, dass** das gefilterte Wasser zum Wasserbehälter zurückgeführt wird, der die ursprüngliche nährstoffhaltige Wasserquelle enthält.

12. Verfahren nach einem der vorhergehenden Ansprüche 4 bis 11, **gekennzeichnet dadurch, dass** das Filtergehäuse ein geschlossenes Gefäß ist, das Wassereinlässe und -auslässe umfasst, und die Expositionsdauer, über die das nährstoffhaltige Wasser mit dem oder den lebenden Braunalgenindividuen in Kontakt gebracht wird, auf Grundlage der Menge an Nährstoffen und der Masse des oder der lebenden Braunalgenindividuen im Filter angepasst wird.

13. Verwendung des Filters nach einem der Ansprüche 1 bis 3 in Verbindung mit einem Meeresaquarium, einer Fischzuchtanlage oder einem anderen Fischbecken, wobei der Wasserkreislauf geschlossen oder offen sein kann.

14. Verwendung nach Anspruch 13, wobei die Verwendung des Filters in Verbindung mit einer Fischzuchtanlage im offenen Wasser erfolgt, wobei der Filter am Rand des Fischbeckens entweder innerhalb oder außerhalb des Netzes des Fischbeckens angeordnet ist, und wobei der Wasserstrom durch den Filter mindestens teilweise durch natürliche Oberflächenströmung erreicht wird.

15. Verwendung nach Anspruch 14, wobei die Verwendung des Filters in Verbindung mit einer Fischzuchtanlage im offenen Wasser erfolgt, und wobei zwei oder mehr Filter außerhalb des Fischbeckens als separate Filtereinheiten, die das Fischbecken umgeben, angeordnet sind.

## Revendications

1. Filtre pour filtrer de l'eau, qui contient des nutriments, **caractérisé en ce que** le filtre comprend
(a) un boîtier de filtre,
(b) une biomasse comprenant un/des individu(s) vivant(s) d'algues brunes liée audit boîtier de filtre ou enfermée dans ledit boîtier de filtre,
(c) un réservoir d'oxydant, et
(d) une première ligne d'alimentation en oxydant,
dans lequel le boîtier de filtre permet à l'eau de s'écouler à travers le filtre tout en retenant le(s) individu(s) vivant(s) d'algues brunes dans le boîtier de filtre, ledit boîtier étant un caisson ou un tube à travers lequel l'eau à filtrer peut s'écouler et qui retient la biomasse comprenant le(s) individu(s) vivant(s) d'algues brunes à l'intérieur du boîtier de filtre, et le flux d'eau permet à l'eau à filtrer d'entrer en contact avec le(s) individu(s) vivant(s) d'algues brunes poussant dans le boîtier de filtre, et dans lequel le(s) individu(s) vivant(s) d'algues brunes sont des macro-algues choisies dans le genre Fucus, et
dans lequel le réservoir d'oxydant est configuré pour amener des enzymes oxydatives par la première ligne d'alimentation en oxydant à l'eau à filtrer avant qu'elle n'atteigne le boîtier de filtre contenant le(s) individu(s) vivant(s) d'algues brunes.

2. Filtre selon la revendication 1, **caractérisé en ce que** le filtre comprend également une lampe qui peut fournir une lumière dans les longueurs d'onde qui stimulent la photosynthèse pour le(s) individu(s) vivant(s) d'algues brunes dans le filtre.

3. Filtre selon la revendication 2, **caractérisé en ce que** la lampe fournit une lumière dans les longueurs d'onde comprises dans le spectre visible, en particulier des longueurs d'onde dans la plage de 400 à 700 nanomètres (nm).

4. Procédé pour filtrer de l'eau, qui contient des nutriments, **caractérisé en ce que** le procédé comprend les étapes suivantes consistant à
(a) fournir un filtre selon l'une des revendications 1 à 3,
(b) guider l'eau, qui contient des nutriments, depuis une source d'eau jusqu'au filtre de sorte que l'eau à filtrer entre en contact avec le(s) individu(s) vivant(s) d'algues brunes contenu(s) dans le boîtier de filtre,
(c) guider l'eau filtrée loin du filtre, et dans lequel
(d) l'eau à filtrer est additionnée d'oxydant avant que l'eau soit guidée vers le filtre, et l'oxydant comprend des enzymes oxydatives telles que des oxygénases, peroxydases et polyphénoloxydases.

5. Procédé selon la revendication 4, **caractérisé en ce que** le procédé comprend également l'étape consistant à fournir une lumière pour le(s) individu(s) vivant(s) d'algues brunes dans le filtre, ladite lumière ayant des longueurs d'onde qui stimulent la photosynthèse.

6. Procédé selon la revendication 5, **caractérisé en ce que** la lumière est fournie par une lampe capable de fournir une lumière dans les longueurs d'onde comprises dans le spectre visible, en particulier des longueurs d'onde dans la plage de 400 à 700 nanomètres (nm).

7. Procédé selon l'une des revendications 4 à 6, **caractérisé en ce que** l'eau à filtrer est de l'eau en provenance d'un aquarium marin, d'une ferme piscicole ou d'un autre bassin piscicole, dans lequel le circuit d'eau peut être fermé ou ouvert.

8. Procédé selon l'une des revendications 4 à 7, **caractérisé en ce que** le flux d'eau guidé à travers le filtre est restreint pour permettre une régulation du débit d'eau vers le filtre.

9. Procédé selon la revendication 8, **caractérisé en ce que** le débit d'eau vers le filtre est ajusté sur la base de la concentration en nutriments dans l'eau.

10. Procédé selon l'une des revendications 4 à 9, **caractérisé en ce que** le flux d'eau contenant des nutriments est guidé vers un bassin de dilution avant d'être guidé vers le filtre et d'être mis en contact avec le(s) individu(s) vivant(s) d'algues brunes, et dans lequel de l'eau pure est ajoutée au bassin de dilution pour ajuster la concentration des nutriments.

11. Procédé selon l'une des revendications précédentes 4 à 10, **caractérisé en ce que** l'eau filtrée est retournée vers le réservoir d'eau qui contenait la source d'eau d'origine contenant des nutriments.

12. Procédé selon l'une des revendications précédentes 4 à 11, **caractérisé en ce que** le boîtier de filtre est un récipient fermé comprenant des entrées et sorties d'eau, et la durée d'exposition pendant laquelle l'eau contenant des nutriments est mise en contact avec le(s) individu(s) vivant(s) d'algues brunes est ajustée sur la base de la quantité de nutriments et de la masse d'individu(s) vivant(s) d'algues brunes dans le filtre.

13. Utilisation du filtre selon l'une des revendications 1 à 3 en liaison avec un aquarium marin, une ferme piscicole ou un autre bassin piscicole, dans laquelle le circuit d'eau peut être fermé ou ouvert.

14. Utilisation selon la revendication 13, dans laquelle l'utilisation du filtre se fait en liaison avec une ferme piscicole en eau libre, dans laquelle le filtre est disposé au bord du bassin piscicole soit à l'intérieur, soit à l'extérieur du filet du bassin piscicole, et dans laquelle le flux d'eau traversant le filtre est au moins partiellement assuré par le courant de surface naturel.

15. Utilisation selon la revendication 14, dans laquelle l'utilisation du filtre se fait en liaison avec une ferme piscicole en eau libre, et dans laquelle deux ou plus de deux filtres sont situés à l'extérieur du bassin piscicole comme unités de filtre séparées entourant le bassin piscicole.
